# EUROPEAN PATENT APPLICATION

(11) **EP 4 826 968 A1**
(43) Date of publication of application: **21.10.2026**
(21) Application number: 25218601.0
(22) Date of filing: 26.11.2025
(51) Int. Cl.: H02K 5/20, H02K 9/19

(54) **COOLING MECHANISM, COOLING UNIT, AND MOTOR UNIT**

(30) Priority: 14.04.2025 JP 2025066267
(71) Applicant: MCF Electric Drive Corporation, Hiroshima City Hiroshima 7320802 (JP)
(72) Inventor: ITASAKA, Naoki, Hiroshima, 7320802 (JP)
(74) Representative: Abel & Imray LLP

(57) **Abstract**

In a cooling mechanism (4A, 4B), a bottom wall (44) has a part (47) directly under an inlet port (45) and is inclined downward from the part (47) toward a first side wall (48), and an interior space of a chamber (42) is formed such that when viewed in a length direction (L) of the chamber (42), a first region (R1) between the first side wall (48) and the inlet port (45) is larger than a second region (R2) between a second side wall (49) and the inlet port (45).

## Description

### BACKGROUND

### Technical Field

The present disclosure relates to a cooling mechanism, a cooling unit, and a motor unit which cool coil ends of a coil attached to a stator core.

### Related Art

As electric vehicles have recently become widespread, downsizing of a motor is required in terms of an improvement in the degree of freedom of vehicle layout, a reduction in the number of parts and cost, and the like. To downsize the motor without reducing power of the motor, a power density of the motor has to be increased. One way to increase the power density is to increase a current density of a coil attached to a stator. When the current density of the coil is increased, Joule heat generated at the coil increases, and therefore, to maintain the performance of the motor, importance is given to coil cooling technologies. For example, Japanese Laid-Open Patent Application No. 2024-078234 discloses a cooling mechanism configured to inject a cooling medium to a coil end of a coil from above.

Incidentally, when a rotor of the motor rotates, the rotation inevitably generates a current of air (rotational wind). In the known technology described above, the cooling medium may be diverted by the rotational wind of the rotor and may not be applied to the coil end as intended. To reliably apply the cooling medium to the coil end, the technology of increasing power of injection (injection speed) of the cooling medium is in demand.

### SUMMARY

In view of the foregoing, it is an object of the present disclosure to provide a cooling mechanism, a cooling unit, and a motor unit which are configured to increase an injection speed of a cooling medium injected toward coil ends.

To achieve the object, the cooling mechanism according to the present disclosure is configured as described below. The cooling mechanism according to the present disclosure is a cooling mechanism configured to discharge a cooling medium toward coil ends which are part of a coil attached to a stator core and which protrude from the stator core in an axial direction. The cooling mechanism includes: an introduction port to which the cooling medium is externally introduced; an injection port from which the cooling medium is injected; and a chamber which is communicated with the introduction port and the injection port and which extends in a horizontal direction. The chamber has a ceiling wall having an inlet port through which the cooling medium, introduced to the introduction port, flows into the chamber, and the chamber has a bottom wall having an outlet port through which the cooling medium flows out to the injection port. The bottom wall has a part directly under the inlet port, the bottom wall being inclined downward from the part toward a first side wall such that the cooling medium flowing down from the inlet port flows to one side in a width direction orthogonal to a length direction in which the chamber extends, the first side wall being disposed at a first end of the chamber in the width direction. The chamber has an interior space formed such that when viewed in the length direction of the chamber, a first region between the first side wall and the inlet port is larger than a second region between a second side wall and the inlet port, the second side wall being disposed at a second end, opposite to the first end, of the chamber in the width direction.

With this configuration, first of all, the ceiling wall of the chamber of the cooling mechanism is communicated with the introduction port to which the cooling medium is externally introduced and the injection port from which the cooling medium is injected, and the ceiling wall has the inlet port through which the cooling medium, introduced to the introduction port, flows into the chamber. This enables the cooling medium to flow down from the inlet port into the chamber. Meanwhile, the bottom wall of the chamber has the outlet port through which the cooling medium flows out to the injection port. This enables the cooling medium deposited in the chamber to flow out through the outlet port to the injection port and to be injected from the injection port toward the coil ends.

Moreover, the bottom wall is inclined downward from the part directly under the inlet port toward the first side wall disposed at the first end of the chamber in the width direction (i.e., away from the second side wall disposed on the second end of the chamber in the width direction) such that the cooling medium flowing down from the inlet port flows to the one side in the width direction orthogonal to the length direction in which the chamber extends, and thereby, the cooling medium flowing down from the inlet port more easily flows to the first region located between the first side wall and the inlet port when viewed in the length direction than to the second region located between the second side wall and the inlet port when viewed in the length direction. As a result, the amount of the cooling medium flowing to the first region is large as compared with the amount of the cooling medium flowing to the second region. This promotes concentration of the cooling medium to the first region (effect 1).

Furthermore, the interior space of the chamber is formed such that when viewed in the length direction of the chamber, the first region is larger than the second region, which relatively reduces resistance (pressure loss) in the first region. As a result, the cooling medium entering the first region readily flows along the length direction as compared with the cooling medium entering the second region. This promotes a flow of the cooling medium mainly to the first region along the length direction (effect 2).

The synergetic effect of the effect 1 and the effect 2 described above increases the flow rate of the cooling medium flowing into the chamber. As a result, the pressure (dynamic pressure) of the cooling medium increases in the entire region in the interior space of the chamber, and the flow velocity of the cooling medium sent out to the injection port increases. Therefore, the injection speed of the cooling medium injected toward the coil ends can be increased.

In the cooling mechanism, an injection flow path connecting the outlet port to the injection port may be inclined downward from the outlet port to the injection port and inward in the axial direction.

Incidentally, a rotational wind of a rotor is inevitably generated in response to rotation of a rotor of a motor and generally swirls around the axial direction away from the rotor in the axial direction (i.e., outward in the axial direction). In this regard, with this configuration, the cooling medium is injected from the injection port inward in the axial direction, in other words, in a direction opposite to a direction of the rotational wind of the rotor. This can countervail (cancel) influence of the rotational wind of the rotor on the injection of the cooling medium. Thus, the cooling medium can be more reliably applied to the coil ends.

In the cooling mechanism, the injection port may be formed such that the injection flow path has a tip portion tapered inward in the axial direction. With this configuration, a side wall of the injection flow path is formed to converge toward the tip portion, and therefore, the cooling medium is injected from the injection port while guided along the shape of the side wall of the injection flow path to the tip portion of the injection flow path, that is, in a direction opposite to the direction of the rotational wind of the rotor. Thus, the cooling medium can be more reliably applied to the coil ends without making any particular change in the entire shape of the cooling mechanism.

The cooling mechanism may extend over an entire length of a ridge region of the coil ends in a transverse direction orthogonal to the axial direction and an up/down direction such that the cooling medium is applied to an overall area of the ridge region, the ridge region being visually perceivable when the coil ends are viewed directly from above. The chamber may extend from a first end part of the cooling mechanism to a second end part of the cooling mechanism in the transverse direction.

With this configuration, first of all, the cooling mechanism extends over the entire length of the ridge region of the coil ends in the transverse direction. This enables the cooling medium to be applied to the ridge region thoroughly, from end to end. Here, the cooling mechanism extends in the transverse direction, while the coil ends are arranged in a circular annulus according to the shape of the stator core, and therefore, from a center part (i.e., topmost part) toward both ends of the ridge region of the coil ends, a distance between the cooling mechanism and each of the coil ends increases. Thus, to reliably apply the cooling medium to the coil ends at both the ends of the ridge region, further increasing the injection speed of the cooling medium is desirable.

In this regard, the chamber extends from the first end part of the cooling mechanism to the second end part of the cooling mechanism in a transverse direction, in other words, almost the entire length of the cooling mechanism. This largely ensures the interior space of the chamber for almost the entire length of the cooling mechanism, which enables the flow rate of the cooling medium flowing into the chamber to be further increased. This further increases the pressure of the cooling medium in the chamber and further increases the flow velocity of the cooling medium sent out to the injection port. This enables the injection speed of the cooling medium injected toward the coil ends to be further increased. Therefore, with this configuration, the cooling medium can be more reliably applied to the coil ends at both the ends of the ridge region.

In the cooling mechanism, the chamber may be formed by being surrounded by a body which is hollow and bottomless and a bottom plate member which is a component separate from the body, and the bottom plate member may have an injection flow path connecting the outlet port to the injection port and penetrating the bottom plate member in a plate thickness direction of the bottom plate member. This configuration enables the injection flow path to be easily formed, for example, by punching.

Moreover, a cooling unit according to the present disclosure includes the cooling mechanism, a supply part configured to supply the cooling medium to the introduction port of the cooling mechanism; and a control unit configured to control the supply part, the control unit being configured to periodically vary a flow rate of the cooling medium which is to be supplied to the introduction port by the supply part. With this configuration, first of all, the injection speed of the cooling medium injected toward the coil ends can be increased in a similar manner to the description above.

Incidentally, to increase the area on the coil ends to which the cooling medium is applied (cooling medium coverage area), increasing the number of injection ports of the cooling mechanism might be considered. However, as the number of injection ports increases, a distance between adjacent injection ports, that is, a distance between liquid columns of the cooling medium injected from the injection ports decreases, and therefore, the phenomenon (so-called Coanda phenomenon) that adjacent liquid columns are pulled toward each other may occur. When the Coanda phenomenon occurs, two adjacent liquid columns join together, thereby forming one liquid column. This reduces the advantage of increasing the number of injection ports to increase the cooling medium coverage area on the coil ends.

In this regard, this configuration imparts fluctuation (pulsation) to the cooling medium injected from the injection ports, which causes a variation in a travel direction of the cooling medium in the chamber. Influenced by the variation, the direction of the cooling medium injected from each injection port randomly varies. Therefore, even when two liquid columns injected from adjacent injection ports come close to each other, the two liquid columns can be easily separated from each other. Therefore, also when the number of injection ports is increased to increase the cooling medium coverage area on the coil ends, the Coanda phenomenon can be suppressed.

A motor unit according to the present disclosure includes: the cooling mechanism; and a stator including the stator core to which the coil is attached. With this configuration, the injection speed of the cooling medium injected toward the coil ends can be increased.

As described above, the present disclosure can increase the injection speed of the cooling medium injected toward the coil ends.

### BRIEF DESCRIPTION OF THE DRAWINGS

FIG. 1 is a schematic diagram of a motor unit according to an embodiment of the present disclosure;
FIG. 2 is a partially cutaway perspective view illustrating an inner structure of the motor unit of FIG. 1;
FIG. 3 is an exploded perspective view of a cooling mechanism according to the embodiment of the present disclosure;
FIG. 4 is a schematic cross-sectional view of the cooling mechanism of FIG. 3 taken along a plane orthogonal to a length direction;
FIG. 5 is a schematic diagram illustrating a positional relationship between the cooling mechanism of FIG. 3 and coil ends;
FIG. 6 is a view (1) for illustrating a flow of oil in a chamber;
FIG. 7 is a view (2) for illustrating a flow of the oil in the chamber;
FIG. 8 is a view (3) for illustrating a flow of the oil in the chamber;
FIG. 9 is a view for illustrating injection of the oil from the cooling mechanism to a rotational wind of a rotor;
FIG. 10 is a schematic diagram of injection ports of a variation;
FIG. 11 is a view for illustrating a Coanda phenomenon; and
FIG. 12 is a graph of an example of a variation in a supply amount by an oil pump over time.

### DESCRIPTION OF EMBODIMENTS

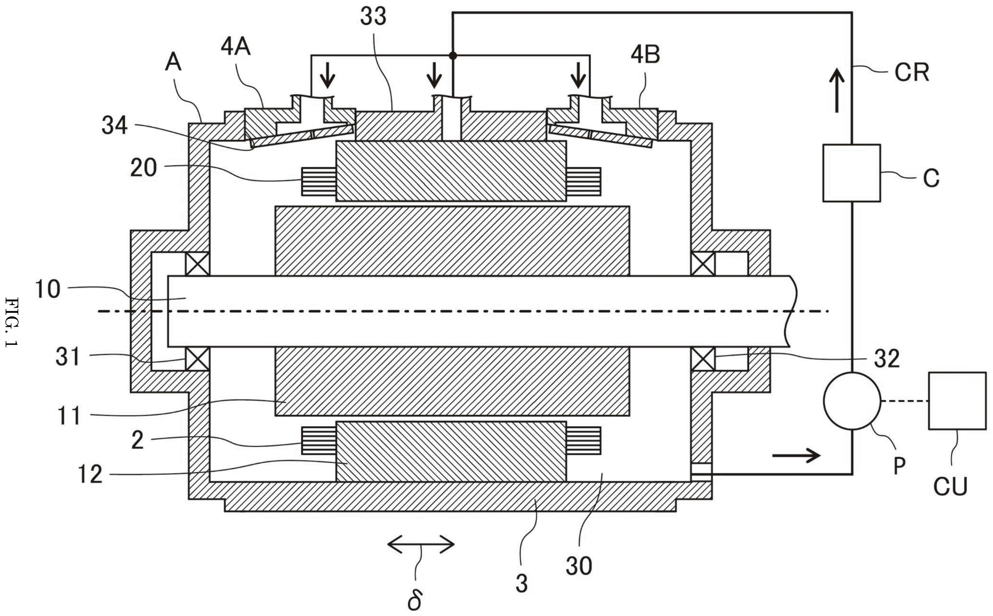

Embodiments of the present disclosure will be described with reference to the drawings below. FIG. 1 is a schematic diagram of a motor unit A according to an embodiment of the present disclosure. As shown in FIG. 1, the motor unit A of the present embodiment includes a motor 1 used as a drive source of a vehicle such as an electric vehicle or a hybrid vehicle. The motor 1 is, for example, an interior permanent magnet motor (IPM motor).

As shown in FIG. 1, the motor 1 is a so-called radial gap motor including a rotor 11 and a stator 12. The rotor 11 is circularly cylindrical and has a center hole in which a shaft 10 is fixed. The stator 12 is disposed to surround an outer peripheral surface of the rotor 11.

The rotor 11 includes a plurality of magnetic steel sheets (for example, silicon steel sheets) stacked one on top of another. In the rotor 11, a permanent magnet (not shown) is embedded.

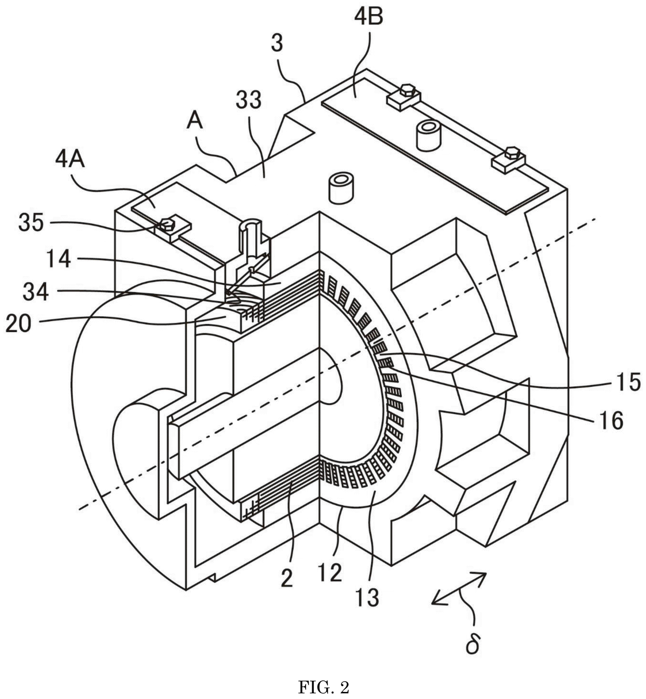

FIG. 2 is a partially cutaway perspective view illustrating an inner structure of the motor unit A. In FIG. 2, hatching on a cross-sectional surface is omitted for the sake of clarity. As shown in FIG. 2, the stator 12 includes: a stator core 13 which is circularly cylindrical; and a coil 2. The stator core 13 includes: a yoke 14 which is circularly cylindrical; and a plurality of teeth 15 aligned at regular intervals in a circumferential direction of the yoke 14 and protruding radially inward from an inner peripheral surface of the yoke 14. Between adjacent teeth 15, slots 16 each penetrate the stator core 13 in an axial direction δ of the stator core 13. Thus, at an inner circumference part of the stator core 13, the plurality of slots 16 are aligned at regular intervals in the circumferential direction in a similar manner to the plurality of teeth 15.

The coil 2 is a so-called segment conductor (SC) winding wire made up of a plurality of segment coils connected to each other. The coil 2 is attached to the stator core 13 by being inserted into the slots 16 and has coil ends 20 protruding from the stator core 13 in the axial direction δ. The coil 2 is a main heat generation source of the stator 12.

Referring back to FIG. 1, the motor unit A includes a housing 3 in addition to the motor 1. The housing 3 has a box shape having a bottom part 30 and houses the rotor 11 and the stator 12 therein. The housing 3 has both end parts in the axial direction δ to which bearings 31 and 32 are attached. The bearings 31 and 32 rotatably support the shaft 10. The housing 3 is made of a non-magnetic material (e.g., aluminum).

The motor unit A described above is connected to a circulation path CR in which a cooling medium (e.g., oil) circulates. To the circulation path CR, the motor unit A, an oil pump P (supply part) which circulates oil, and an oil cooler C which cools the oil are connected in this order. When the oil pump P is driven, the oil deposited at the bottom part 30 of the housing 3 is sent to the oil cooler C, and the oil cooled by the oil cooler C is supplied to an upper part of the housing 3 of the motor unit A. In other words, the oil pump P supplies the oil to the motor unit A. The oil supplied to the motor unit A removes heat from the motor 1, thereby cooling the motor 1, and then, the oil returns to the bottom part 30 of the housing 3. The flow rate (discharge rate) of the oil pump P is controlled by a control unit CU which controls the oil pump P.

As shown in FIGS. 1 and 2, the motor unit A includes, in addition to the components described above, cooling mechanisms 4A and 4B which discharge the oil toward the coil ends 20. By using the cooling mechanisms 4A and 4B, the oil is injected (applied in a shower-like manner) to the coil ends 20 which are part of the coil 2, which is the main heat generation source of the stator 12, thereby efficiently cooling the stator 12.

The cooling mechanisms 4A and 4B are disposed at both end parts in the axial direction δ at the upper part of the housing 3. The cooling mechanisms 4A and 4B inserted into openings 34 formed in a top plate portion 33 of the housing 3 are fixed to the top plate portion 33 of the housing 3 by fastening members 35 (see FIG. 2). The cooling mechanisms 4A and 4B have configurations common to each other, and therefore, the cooling mechanism 4A is described below as a representative of the cooling mechanisms 4A and 4B.

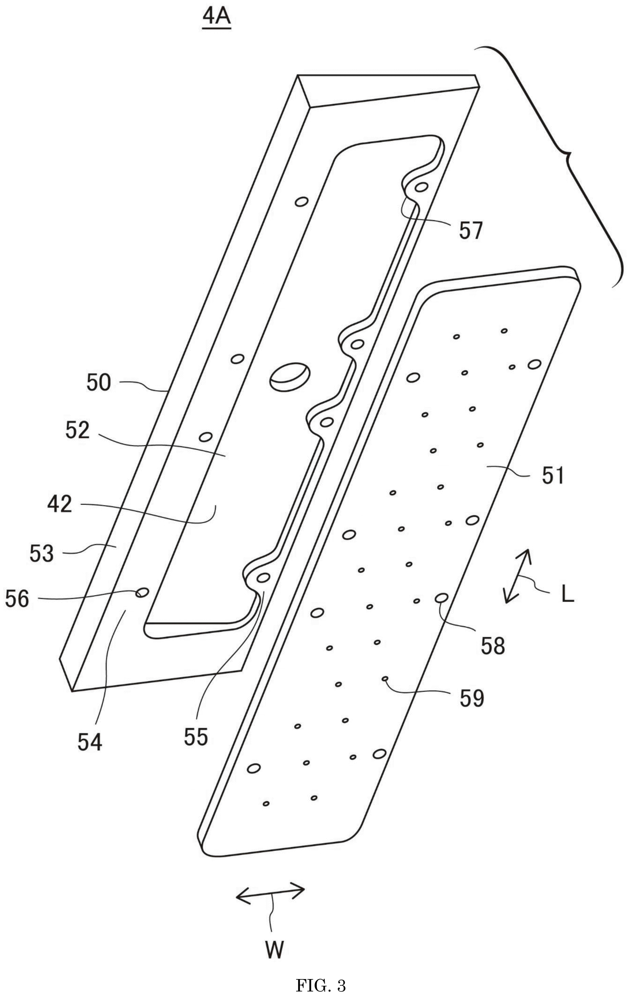

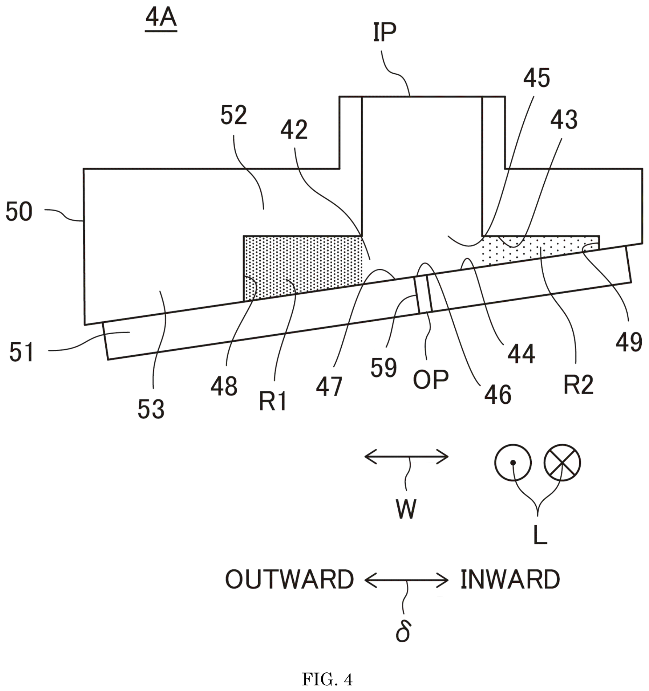

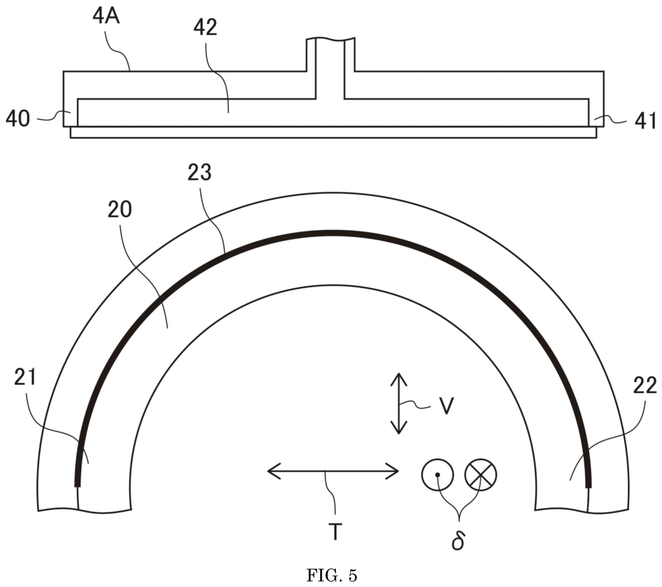

FIG. 3 is an exploded perspective view of the cooling mechanism 4A according to the embodiment of the present disclosure. FIG. 4 is a schematic cross-sectional view of the cooling mechanism 4A taken along a plane orthogonal to a length direction L. FIG. 5 is a schematic diagram illustrating a positional relationship between the cooling mechanism 4A and the coil ends 20. As shown in FIGS. 3 and 4, the cooling mechanism 4A is hollow, and a chamber 42 extending in a horizontal direction is provided in the cooling mechanism 4A. A width direction W of the chamber 42 is orthogonal to the length direction L in which the chamber 42 extends. The cooling mechanism 4Ain the present embodiment is disposed such that the width direction W is aligned with the axial direction δ.

As shown in FIG. 5, in the present embodiment, the cooling mechanism 4A extends over an entire length of a ridge region 23 of the coil ends 20 in a transverse direction T orthogonal to the axial direction δ and an up/down direction V such that the oil is applied to the overall area of the ridge region 23 that is visually perceivable when the coil ends 20 are viewed directly from above, and the chamber 42 extends from a first end part 40 of the cooling mechanism 4A to a second end part 41 of the cooling mechanism 4A in the transverse direction T, in other words, extends over almost the entire length of the cooling mechanism 4A.

Returning to FIG. 4, the cooling mechanism 4A has an upper part having an introduction port IP to which the oil is externally, that is, from the circulation path CR (see FIG. 1) introduced, and the cooling mechanism 4Ahas a lower part having injection ports OP from which the oil is injected. In the present embodiment, the introduction port IP is open upward, and the injection ports OP are open downward. The chamber 42 is communicated with the introduction port IP and the injection ports OP. The chamber 42 has a ceiling wall 43 having an inlet port 45 into which the oil introduced to the introduction port IP flows, and the chamber 42 has a bottom wall 44 having outlet ports 46 through which the oil flows out to the injection ports OP.

As shown in FIGS. 3 and 4, the cooling mechanism 4A of the present embodiment is a combination of: a body 50 which is hollow and bottomless; and a bottom plate member 51 which is a component separate from the body 50. That is, the chamber 42 in the present embodiment is formed by being surrounded by the body 50 and the bottom plate member 51. As shown in FIG. 3, the bottom plate member 51 is fixed to a lower part of the body 50 with a plurality of fastening members (not shown) such as bolts. Between the body 50 and the bottom plate member 51, a sealing material (not shown) which liquid-tightly seals an interior space of the chamber 42 is provided.

The housing 50 is made of, for example, aluminum or iron. The body 50 includes: a top plate portion 52 having a rectangular shape; and a peripheral plate part 53 extending downward from the entire peripheral edge of the top plate portion 52. As shown in FIG. 3, a pair of side plate parts 54 and 55 of the peripheral plate part 53 which extend in the length direction L have lower surfaces having fastening holes 56 into which fastening members (now shown) are fastened. The fastening holes 56 are aligned in a row along the length direction L of the chamber 42. An inner surface of the side plate part 55 (i.e., a part of an inner peripheral wall of the chamber 42) partially and relatively protrudes inward of the chamber 42, thereby forming boss parts 57 surrounding the fastening holes 56.

The bottom plate member 51 is formed by, for example, punching a magnetic steel sheet. The bottom plate member 51 has: insertion holes 58 into which the fastening members fastened into the fastening holes 56 of the body 50 are inserted; and injection flow paths 59 connecting the outlet ports 46 to the injection ports OP. The insertion holes 58 and the injection flow paths 59 penetrate the bottom plate member 51 in a plate thickness direction of the bottom plate member 51. As shown in FIG. 4, in the present embodiment, the bottom plate member 51 taking a position inclined downward toward one side in the width direction W when viewed in the length direction L (in the present embodiment, inclined outward in the axial direction δ) is fixed to the body 50, and consequently, the bottom wall 44 of the chamber 42 is inclined with respect to a horizontal plane, and each injection flow path 59 is inclined downward from the outlet port 46 to the injection port OP and inward in the axial direction δ.

In the cooling mechanism 4A, the oil supplied by the oil pump P (see FIG. 1) from the circulation path CR to the introduction port IP flows from the inlet port 45 downward into the chamber 42. Then, the oil deposited in the chamber 42 flows out through the outlet ports 46 to the injection ports OP and is injected from the injection ports OP toward the coil ends 20. The cooling mechanism 4A has the following geometric features to increase the injection speed of the oil.

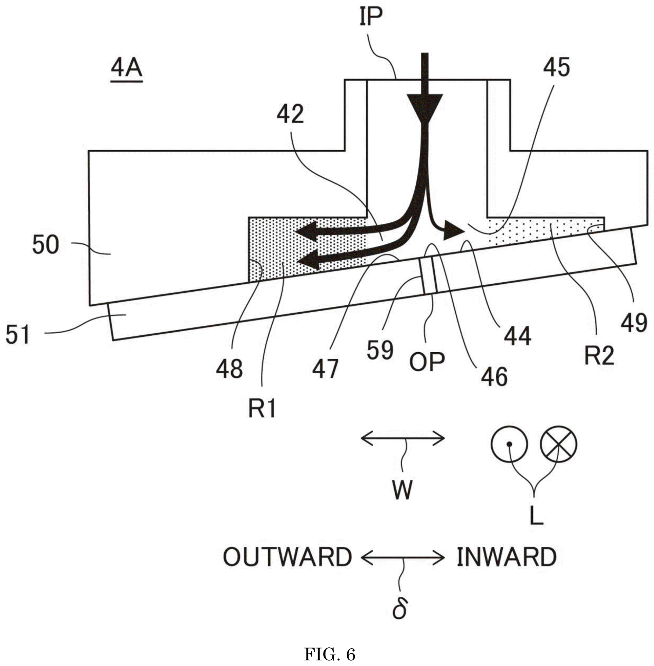

FIGS. 6 to 8 are views (1) to (3) for illustrating a flow of the oil in the in the chamber. As shown in FIGS. 4 and 6, the bottom wall 44 of the chamber 42 has a part 47 directly under the inlet port 45 and is inclined downward from the part 47 toward a first side wall 48 disposed at a first end of the chamber 42 in the width direction W (i.e., away from a second side wall 49 disposed on a second end of the chamber 42 in the width direction W) such that the oil flowing down from the inlet port 45 flows to the one side in the width direction W of the chamber 42 (in the present embodiment, outward in the axial direction δ).

Due to such a geometrical feature, the oil flowing down from the inlet port 45 more easily flows to a first region R1 (in the drawing, darkly shaded with dots) located between the first side wall 48 and the inlet port 45 when viewed in the length direction L than to a second region R2 (in the drawing, lightly shaded with dots) located between the second side wall 49 and the inlet port 45 when viewed in the length direction L. As a result, as conceptually indicated by arrows in FIG. 6, the amount of the oil flowing to the first region R1 is large as compared with the amount of the oil flowing to the second region R2. This promotes concentration of the oil to the first region R1 (effect 1).

In addition, as shown in FIGS. 4 and 6, the interior space of the chamber 42 is formed such that the first region R1 is larger than the second region R2 when viewed in the length direction L of the chamber 42. Specifically, the interior space of the chamber 42 is formed such that the area of the first region R1 is larger than the area of the second region R2 in an arbitrary cross-section orthogonal to the length direction L.

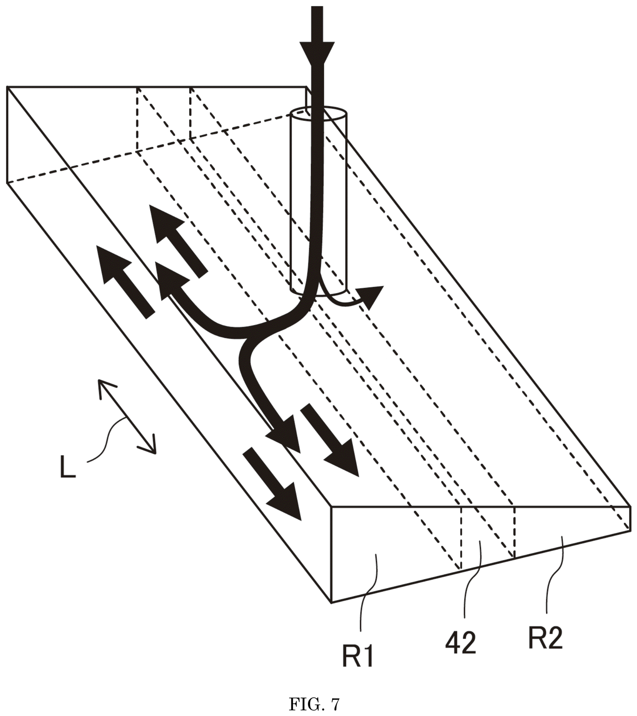

Such a geometric feature relatively reduces resistance (pressure loss) in the first region R1 (as compared with the second region R2). As a result, as conceptually indicated by arrows in FIG. 7, the oil entering the first region R1 readily flows along the length direction L as compared with the oil entering the second region R2. This promotes a flow of the oil mainly to the first region R1 along the length direction L (effect 2).

The synergetic effect of the effect 1 and the effect 2 described above increases the flow rate of the oil flowing into the chamber 42. As a result, the pressure (dynamic pressure) of the oil increases in the entire region in the interior space of the chamber 42, and the flow velocity of the oil sent out to the injection ports OP (see FIGS. 4 and 6) increases. Therefore, the injection speed of the oil injected toward the coil ends 20 (see FIGS. 1 and 2) can be increased.

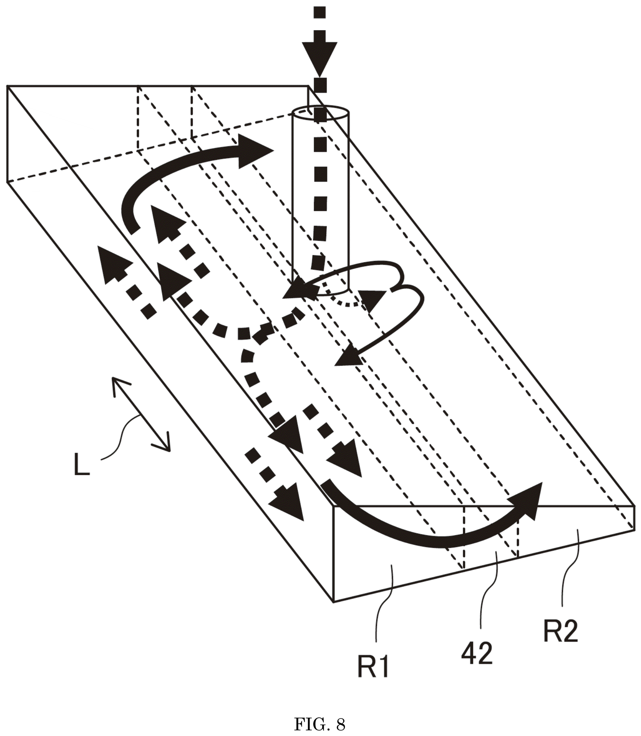

The flow of the oil, mainly to the first region R1 as described above, is formed in the chamber 42, and thereby, as conceptually shown by thick solid line arrows in FIG. 8, the oil flowing to both ends in the length direction L in the first region R1 enters the second region R2, and as conceptually shown by thin solid line arrows, the oil in the second region R2 enters the first region R1, and as a result, a swirling current of oil is formed. Thus, the oil is uniformly distributed to the entirety of the interior space of the chamber 42, and therefore, the oil can be injected uniformly from each injection port OP toward the coil ends 20.

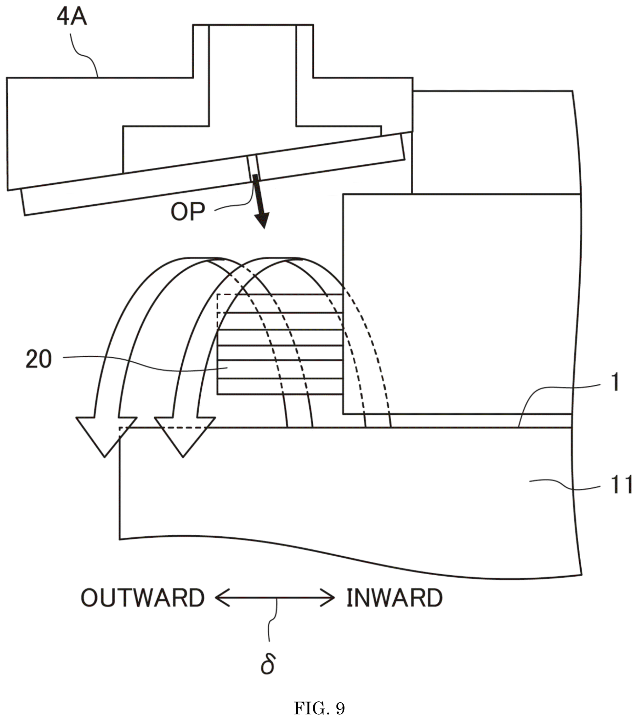

FIG. 9 is a view for illustrating injection of the oil from the cooling mechanism 4A to a rotational wind of the rotor 11. In FIG. 9, the injection of the oil from the injection port OP of the cooling mechanism 4A is conceptually shown by an arrow. Incidentally, when the rotor 11 of the motor 1 rotates, the rotation inevitably generates a current of air (rotational wind) as conceptually shown by void arrows in FIG. 9. Typically, the rotational wind of the rotor 11 swirls around the axial direction δ away from the rotor 11 in the axial direction δ (i.e., outward in the axial direction δ). When the injection speed of the oil is low, there is the possibility that the oil is diverted by the rotational wind of the rotor 11 and is not applied to the coil ends 20 as intended. In this regard, increasing the injection speed of the oil injected toward the coil ends 20 as described above enables the oil to be applied to the coil ends 20 as intended.

Moreover, as described above, each injection flow path 59 is inclined downward from the outlet port 46 to the injection port OP and inward in the axial direction δ (see FIGS. 4 and 6), and thereby, the oil is injected from each injection port OP inward in the axial direction δ, in other words, in a direction opposite to the direction of the rotational wind of the rotor 11. This can countervail (cancel) the influence of the rotational wind of the rotor 11 on the injection of the oil. Thus, the oil is more reliably applied to the coil ends 20.

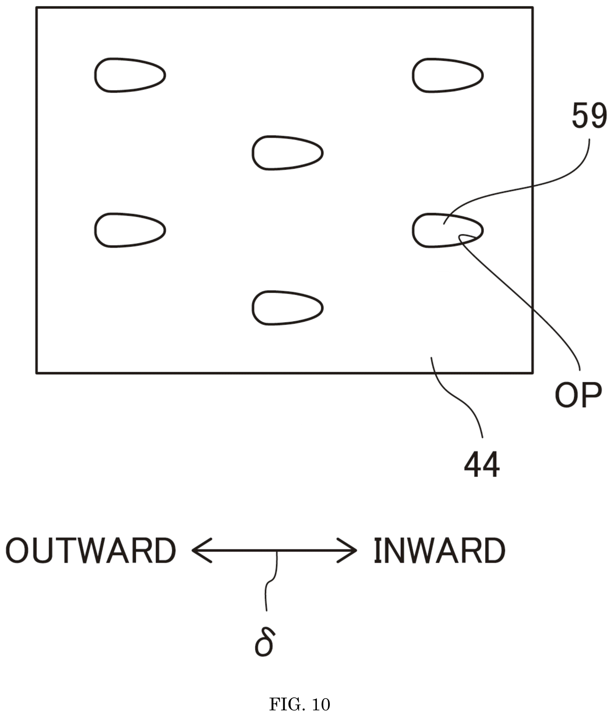

FIG. 10 is a schematic diagram of injection ports OP of a variation. Incidentally, regarding the formation of the injection flow paths 59, forming the injection flow paths 59 surface-orthogonal to the bottom wall 44 of the chamber 42 is production technologically easy and is thus preferable. If the injection flow paths 59 are formed surface-orthogonal to the bottom wall 44, the injection flow paths 59 may be further inclined, to apply the oil more reliably to the coil ends 20, such that the injection ports OP are directed further inward in the axial direction δ, but to implement this, the bottom wall 44 has to be further inclined with respect to the horizontal plane. However, the more the bottom wall 44 is inclined with respect to the horizontal plane, the shorter the distance between the cooling mechanism 4A and the coil 2. Nevertheless, to ensure an insulation distance between the cooling mechanism 4A and the coil 2, the angle of inclination at which the bottom wall 44 may be inclined is limited.

In this regard, as described above, when each injection flow path 59 is inclined downward from the outlet port 46 to the injection port OP and inward in the axial direction δ, as shown in FIG. 10, each injection port OP is formed such that each injection flow path 59 has a tip portion tapered inward in the axial direction δ, and thereby, the oil can be more reliably applied to the coil ends 20 while the angle of inclination of the bottom wall 44 is suppressed. With this injection port OP, a side wall of each injection flow path 59 is formed to converge toward the tip portion, and therefore, the oil is injected from the injection port OP while guided along the shape of the side wall of the injection flow path 59 to the tip portion of the injection flow path 59, that is, in a direction opposite to the direction of the rotational wind of the rotor 11. Thus, the oil can be more reliably applied to the coil ends 20 without making any particular change in the entire shape of the cooling mechanism 4A.

Moreover, as described above, the cooling mechanism 4A extends over the entire length of the ridge region 23 of the coil ends 20 in the transverse direction T (see FIG. 5). This enables the oil to be applied to the ridge region 23 thoroughly, from end to end (from a coil end 21 to a coil end 22). Here, the cooling mechanism 4A extends in the transverse direction T, while the coil ends 20 are arranged in a circular annulus according to the shape of the stator core 13, and therefore, from the center part (i.e., topmost part) toward both the ends of the ridge region 23 of the coil ends 20, the distance between the cooling mechanism 4A and each of the coil ends 20 increases. Thus, to reliably apply the oil to the coil ends 21 and 22 at both the ends of the ridge region 23, further increasing the injection speed of the oil is desirable.

In this regard, as described above, the chamber 42 extends almost the entire length of the cooling mechanism 4A (see FIG. 5). This largely ensures the interior space of the chamber 42 for almost the entire length of the cooling mechanism 4A, which enables the flow rate of the oil flowing into the chamber 42 to be further increased. This further increases the pressure of the oil in the chamber 42 and further increases the flow velocity of the oil sent out to the injection ports OP, and therefore, the injection speed of the oil injected toward the coil ends 20 can be further increased. Therefore, with this configuration, the oil can be more reliably applied to the coil ends 21 and 22 at both ends in the ridge region 23.

Moreover, as described above, the bottom plate member 51 of the cooling mechanism 4A is a component separate from the body 50, and the injection flow paths 59 penetrate through the bottom plate member 51 in the plate thickness direction of the bottom plate member 51 (see FIGS. 4 and 6). This enables the injection flow paths 59 to be easily formed, for example, by punching.

Note that the example described above should not be construed as limiting. Alternatively, the body 50 and the bottom plate member 51 of the cooling mechanism 4A may be formed integrally with each other. Moreover, as long as the chamber 42 of the cooling mechanism 4A has the above-explained shape and the oil is applied to the coil ends 20, directions in which the introduction port IP and the injection ports OP open, a direction in which the injection flow paths 59 extend, and the like are not limited to particular directions.

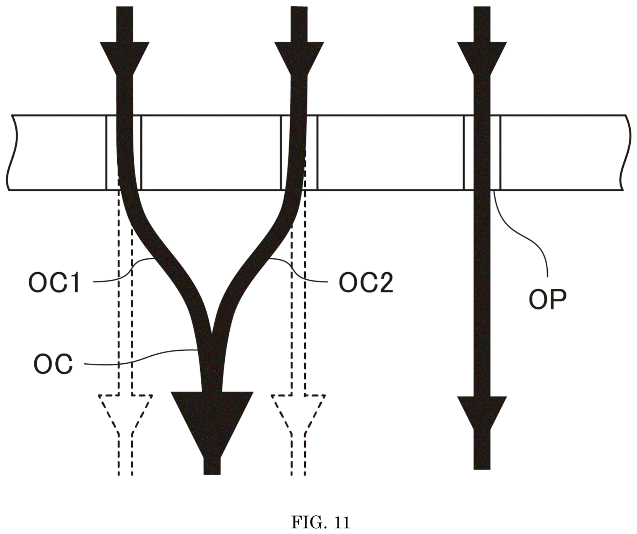

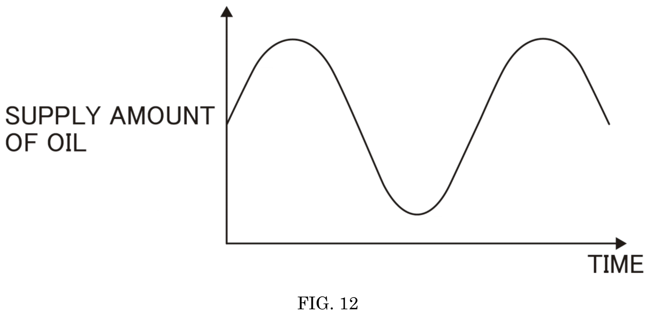

FIG. 11 is a view for illustrating a Coanda phenomenon. FIG. 12 is a graph of an example of a variation in a supply amount by an oil pump P over time. The cooling mechanisms 4A and 4B described above constitute, together with the oil pump P and the control unit CU (for these, see FIG. 1), a cooling unit.

Incidentally, to increase the area (oil coverage area) on the coil ends 20 to which the oil is applied, increasing the number of injection ports OP of the cooling mechanism 4A might be considered. However, as the number of injection ports OP increases, a distance between adjacent injection ports OP, that is, a distance between oil columns of the oil injected from the injection ports OP decreases, and therefore, as shown in FIG. 11, the phenomena (so-called Coanda phenomenon) that adjacent oil columns OC1 and OC2 are pulled toward each other may occur. In FIG. 11, broken lines indicate the oil columns OC1 and OC2 in a case where they are not pulled toward each other. When the Coanda phenomenon occurs, two adjacent oil columns OC1 and OC2 join together, thereby forming one oil column OC. This reduces the advantage of increasing the number of injection ports OP to increase the oil coverage area on the coil ends 20.

In order to suppress the Coanda phenomenon, the control unit CU in the present embodiment periodically varies the flow rate (supply amount) of oil supplied to the introduction port IP of the cooling mechanism 4A by the oil pump P. Specifically, the control unit CU increases and reduces the supply amount of the oil pump P to vary the flow velocity of the oil introduced to the introduction port IP. For example, as shown in FIG. 12, the control unit CU increases and reduces the supply amount of the oil by the oil pump P in a sine wave form over time. Varying the supply amount by the oil pump P in this way imparts fluctuation (pulsation) to the oil injected from the injection ports OP, which causes a variation in the travel direction of the oil in the chamber 42. Influenced by the variation, the direction of the oil injected from each injection port OP randomly varies. Therefore, even when two oil columns injected from adjacent injection ports OP come close to each other, the two oil columns can be easily separated from each other. Therefore, also when the number of injection ports OP is increased to increase the oil coverage area on the coil ends 20, the Coanda phenomenon can be suppressed.

Furthermore, varying the supply amount by the oil pump P as described above varies the injection direction of the oil from the injection ports OP, which provides the additional effect that the oil coverage area by the oil injected from each injection port OP increases.

Moreover, the shorter the length of each injection flow path 59 connecting the outlet port 46 of the chamber 42 to the injection port OP, the more susceptible the injection direction of the oil from the injection port OP is to the travel direction of the oil in the chamber 42, and therefore, when varying the supply amount of the oil as described above varies the travel direction of the oil in the chamber 42, the length of each injection flow path 59 is preferably reduced accordingly. Thus, the variation in the travel direction of the oil in the chamber 42 increases the variation in the injection direction of the oil from the injection ports OP, and therefore, the Coanda phenomenon can more efficiently be suppressed.

The embodiment described above is an example in all aspects and should not be construed as limiting. Thus, the technical scope of the present invention should not be interpreted based on only the embodiment and the examples described above but is defined based on the recitation of the claims. Moreover, modifications and variations belonging to the equivalent of the scope of the claims should all fall within the scope of the present invention.

The present disclosure has been described in conformity with the examples, but the present disclosure should not be limited to the examples and/or structures. The present disclosure includes variations and modifications within the scope of the equivalent. In addition, various combinations and/or aspects, and in addition, another combinations and/or aspects to which only one element, more or less, is included to them are within the scope and the spirit of the present disclosure.

## Claims

1. A cooling mechanism (4A, 4B) configured to discharge a cooling medium toward coil ends (20) which are part of a coil (2) attached to a stator core (13) and which protrudes from the stator core (13) in an axial direction (δ), the cooling mechanism (4A, 4B) comprising:
an introduction port (IP) to which the cooling medium is externally introduced;
an injection port (OP) from which the cooling medium is injected; and
a chamber (42) which is communicated with the introduction port (IP) and the injection port (OP) and which extends in a horizontal direction,
the chamber (42) having a ceiling wall (43) having an inlet port (45) through which the cooling medium, introduced to the introduction port (IP), flows into the chamber (42), and the chamber (42) having a bottom wall (44) having an outlet port (46) through which the cooling medium flows out to the injection port (OP),
the bottom wall (44) having a part (47) directly under the inlet port (45), the bottom wall (44) being inclined downward from the part (47) toward a first side wall (48) such that the cooling medium flowing down from the inlet port (45) flows to one side in a width direction (W) orthogonal to a length direction (L) in which the chamber (42) extends, the first side wall (48) being disposed at a first end of the chamber (42) in the width direction (W),
the chamber (42) having an interior space formed such that when viewed in the length direction (L) of the chamber (42), a first region (R1) between the first side wall (48) and the inlet port (45) is larger than a second region (R2) between a second side wall (49) and the inlet port (45), the second side wall (49) being disposed at a second end, opposite to the first end, of the chamber (42) in the width direction (W).

2. The cooling mechanism (4A, 4B) of claim 1, wherein
an injection flow path (59) connecting the outlet port (46) to the injection port (OP) is inclined downward from the outlet port (46) to the injection port (OP) and inward in the axial direction (δ).

3. The cooling mechanism (4A, 4B) of claim 2, wherein
the injection port (OP) is formed such that the injection flow path (59) has a tip portion tapered inward in the axial direction (δ).

4. The cooling mechanism (4A, 4B) of claim 1, claim 2, or claim 3, wherein
the cooling mechanism (4A, 4B) extends over an entire length of a ridge region (23) of the coil ends (20) in a transverse direction (T) orthogonal to the axial direction (δ) and an up/down direction (V) such that the cooling medium is applied to an overall area of the ridge region (23), the ridge region (23) being visually perceivable when the coil ends (20) are viewed directly from above, and
the chamber (42) extends from a first end part (40) of the cooling mechanism (4A, 4B) to a second end part (41) of the cooling mechanism (4A, 4B) in the transverse direction (T).

5. The cooling mechanism (4A, 4B) of any of claims 1 to 4, wherein
the chamber (42) is formed by being surrounded by a body (50) which is hollow and bottomless and a bottom plate member (51) which is a component separate from the body, and
the bottom plate member (51) has an injection flow path (59) connecting the outlet port (46) to the injection port (OP) and penetrating the bottom plate member (51) in a plate thickness direction of the bottom plate member (51).

6. A cooling unit comprising:
the cooling mechanism (4A, 4B) of any of claims 1 to 5;
a supply part (P) configured to supply the cooling medium to the introduction port (IP) of the cooling mechanism (4A, 4B); and
a control unit (CU) configured to control the supply part (P),
the control unit (CU) being configured to periodically vary a flow rate of the cooling medium which is to be supplied to the introduction port (IP) by the supply part (P).

7. A motor unit (A) comprising:
the cooling mechanism (4A, 4B) of any of claims 1 to 5; and
a stator (12) including the stator core (13) to which the coil (2) is attached.
